# EUROPÄISCHE PATENTSCHRIFT

(11) **EP 2 077 302 B1**
(45) Veröffentlichungstag und Bekanntmachung des Hinweises auf die Patenterteilung: **31.08.2016**
(21) Anmeldenummer: 08002782.4
(22) Anmeldetag: 15.02.2008
(51) Int. Cl.: E04D 13/147, C09D 5/38

(54) **Metallblech mit einer Beschichtung aus Lack, der eine Farbe und Glanz des Bleis aufweist**
Sheet metal with a paint coating, which has the colour and brightness of lead
Tôle métallique avec un revêtement de la laque qui montre la couleur et luisance du plomb

(30) Priorität: 03.01.2008 DE 202008000136 U
(43) Veröffentlichungstag der Anmeldung: 08.07.2009
(73) Patentinhaber: RÖHR + STOLBERG GmbH, 47809 Krefeld (DE)
(72) Erfinder: Kissenbeck, Christoph, 47802 Krefeld (DE)
(74) Vertreter: RGTH

(56) Entgegenhaltungen:
- EP-A- 0 277 497
- EP-A1- 1 229 086
- DE-A1- 3 832 070
- DE-A1- 4 032 058
- DE-A1- 10 027 270
- DE-A1- 10 126 652
- DE-A1- 10 252 035
- DE-A1- 19 728 856
- DE-A1- 19 804 291
- DE-C1- 3 942 921
- DE-U1- 29 914 796

## Beschreibung

Die Erfindung betrifft ein Metallblech bzw. bevorzugterweise ein Bleiblech gemäß dem Oberbegriff des Anspruches 1.

Bleischürzen und Dichtungsbänder aus Blei, Bleilegierungen, oder aus anderweitigem metallischen Material werden im Umfangsbereich des Eindeckrahmens von Dachfenstern, im Bereich von Dachdurchdringungen von Kaminen oder als Dichtungsband für eine First- oder Gratabdeckung verwendet, um an die Dacheindeckung anzuschließen und um einen abgedichteten Übergang zu schaffen. Bestehen die Schürzen oder die Dichtungsbänder aus Blei oder Bleilegierungen, so hat sich gezeigt, dass durch Witterungseinflüsse, insbesondere in Verbindung mit Regenwasser, sich auf der Oberfläche des Bleis, bevor sich eine stabile Bleioxidschicht gebildet hat, Bleicarbonate bilden, die eine weiße Schicht bilden, die vom Regenwasser nicht immer abgewaschen wird und die sich in rauen Eindeckmaterialien, wie Dachsteinen, ablagern und kaum entfernbar sind. Dem wird versucht zu begegnen, indem die Oberflächen der Schürzen oder Dichtungsbänder mit einer Lackschicht versehen werden. Die DE 38 32 070 C2 offenbart eine Bleischürze mit einer Lackbeschichtung, wobei die Lackschicht aus einem Acrylat-Lack auf der Basis von Eisenoxid und/oder Titanoxid besteht, der besonders witterungsbeständig sein soll.

Aus der DE 299 14 796 U1 ist ein Metallblech aus Blei bekannt, das mit einem Korrosionsschutz überzogen wird und der einer Umgebungsfarbe angepasst ist. Der Korrosionsschutz ist als Farbbeschichtung bzw. als Farblackschicht ausgeführt. Auch gemäß der DE 102 52 035 A1 soll ein Lack eingesetzt werden, um eine Farbanpassung an die unterschiedliche Farbgebung der Dächer zu erreichen.

In der DE 197 28 856 A1 wird beschrieben, dass in der Automobillackierung oder für andere Bereiche Metalleffektlackierungen eingesetzt werden können. Hier wird offenbart, dass Bleiverbindungen, wie Bleichromat, Bleicyanamid, Bleisilicochromat, eingesetzt werden können.

Aufgabe der vorliegenden Erfindung ist es, ein Metallblech, bevorzugterweise eine vorgeformte oder verformbare Schürze oder Dichtungsband aus Blei, Bleilegierungen oder aus einem zinnplattierten Blei, zum Zeitpunkt des Verlegens oder Verarbeitens oberflächenmäßig so zu behandeln, dass auch nach Bildung der stabilen Bleioxidschicht oder von eine weiße Schicht bildenden Bleicarbonaten eine Bleioberfläche mit der charakteristischen Farbgebung und dem Glanz des Bleis erhalten wird. Es soll somit ein Metallblech mit einer bleifarbenen Lackbeschichtung geschaffen werden.

Diese Aufgabe wird durch die Merkmale des Anspruches 1 gelöst.

Hiernach besteht die Erfindung in einem Metallblech zur Verwendung als Schürze im Umfangbereich eines Eindeckrahmens von Dachfenstern, im Bereich von Dachdurchdringungen von Kaminen oder als Dichtungsband für eine First- oder Gratabdeckung mit an die Oberseite von im First- oder Gratbereich eines Daches verlegten Dachziegeln anpassbaren Längsseitenbereichen, wobei das Metallblech aus einem ebenflächigen verformbaren Formkörper, wie Platte oder Folie, aus einem metallischen Material, wie Kupfer, Zink, Aluminium, bevorzugterweise aus Blei auch im Verbund mit anderem metallischen Material oder im Verbund mit einer Kunststofffolie oder aus einem Verbundmaterial aus einem zu Folien oder dünnen Platten strang- oder walzgepressten Bleigrundmaterial oder aus einem zinnplattierten bleihaltigen Grundmaterial besteht und wobei eine auf die Oberfläche des Metallbleches aufgetragene Beschichtung eine der Farbe und dem Glanz des Bleis entsprechende Farbgebung besteht aufweist, wobei die Beschichtung (50) aus einem farblosen Lack mit eingearbeiteten Pigmenten oder Teilchen (60) aus Blei besteht, wobei die Pigmente oder Teilchen (60) aus Blei eine Korngrößenverteilung von 0,3 µm bis 200 µm mit einer spezifischen Oberfläche von 1,0 m²/g bis 1,5 m²/g aufweisen.

Vermittels der erfindungsgemäßen Ausgestaltung der Oberfläche eines Metallbleches aus einem beliebigen Material und insbesondere aus Blei oder Bleilegierungen wird der Vorteil erreicht, dass durch die spezielle Folie, Lackbeschichtung oder Pulverlackbeschichtung, z. B. bereits verlegte Schürzen oder Dichtungsbänder, eine Oberfläche in einer Farbgebung erhalten wird, die dem des Bleis entspricht, so dass u. a. auch eine Anpassung in Bezug auf die Farbgebung bereits verlegter Teile aus Blei möglich ist. Bleischürzen und Bleidichtungsbänder können somit nach der Bildung einer weißen Bleicarbonat-Schicht derart oberflächenbehandelt werden, dass der optische Eindruck von neu verlegten Bleiblechen geschaffen wird. Gleichzeitig erhalten die Oberflächen einen Wetterschutz.

Die Pigmente oder Teilchen aus Blei für die Herstellung des Lackes weisen die Beimengungen eine Korngrößenverteilung von 0,3 µm bis 200 µm mit einer spezifischen Oberfläche von 1,0 m²/g bis 1,5 m²/g auf. Es wird dadurch ein Lack als Beschichtungsmittel geschaffen, der den optischen Eindruck einer Bleischicht vermittelt.

Mit der Erfindung wird eine Beschichtung von Metallblechen erhalten, wobei die Beschichtung Farbe, Aussehen und Glanz des Bleis aufweist und somit den Charakter dem Beschauer vermittelt, dass es sich um eine Bleiabdeckung oder -dichtung handelt.

Des Weiteren wird bevorzugt mit der erfindungsgemäßen Beschichtung die Bleicarbonatbildung bzw. die Bildung von Bleiweiß [2Pb CO₃·Pb(OH)₂] vermieden. Außerdem soll der Lebenszyklus des Metallbleches und insbesondere des Bleibleches wesentlich verlängert werden. Auch soll die Recyclingfähigkeit erhalten bleiben. Bevorzugt wird die gleichmäßige, metallische blaugraue Bleioptik durch einen Lack erzeugt.

Die Erfindung sieht des Weiteren bevorzugt die Verwendung des Metallbleches, bevorzugterweise des Bleibleches vor und zwar
- in An- und Abschlüssen für kleinformatige Anwendungen in dünnen Folien ab 0,1 mm bis zu dicken Blechen bis zu 5 mm, oder
- in Schürzen an Eindeckrahmen für Dachflächenfenster, Solar- und Photovoltaikanlagen, oder
- Dachdurchdringungen für Kamine, Abluftrohre, Antennen, Satellitenschüsseln, oder als
- First- und Gratabdeckung, oder als
- Anschluss an Dacheindeckungen, oder als
- An- und Abschluss von Dächern, Mauern, Fassaden und Wänden.

Das Metallblech, bevorzugterweise das Bleiblech findet des Weiteren bevorzugt Verwendung als
- großformatige, flächendeckende Eindeckung für Dächer, Mauern, Fassaden und Wänden, oder
- Trennlage für flächige Trennung von Werkstoffen zur Vermeidung von Wechselwirkungen zwischen Schichten,
- strukturierte Trennlage mit Drainagefunktion zur Abführung von Feuchtigkeit,
- Abschirmung gegen hochenergetische Strahlung im Innen- und Außenbereich,
- Schallschutz für den Innen- und Außenbereich.

Ausführungsbeispiele der Erfindung werden nachstehend anhand der Zeichnungen näher erläutert. Es zeigen:
- Fig. 1: eine Draufsicht auf einen Abschnitt eines z. B. als Dichtungsband verwendbares Metallblech mit einer Farblackbeschichtung mit der Farbe und dem Glanz von Blei,
- Fig. 2: einen senkrechten Längsschnitt, gemäß Linie II-II in Fig. 1,
- Fig. 3: eine Draufsicht auf einen Abschnitt des Metallbleches mit einer Lackbeschichtung aus einem farblosen Lack mit in diesen eingearbeiteten Teilchen aus Blei,
- Fig. 4: einen senkrechten Längsschnitt gemäß Linie IV-IV in Fig. 3,
- Fig. 5: einen Abschnitt eines Daches mit einer aus dem erfindungsgemäßen Metallblech bestehenden Kamineinfassung und
- Fig. 6: einen Abschnitt eines Daches mit einem Dachfenster und mit einer aus dem Metallblech hergestellten Schürze.

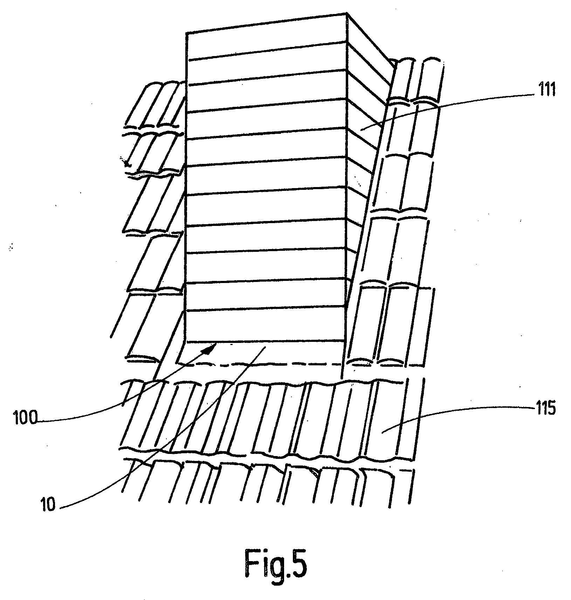

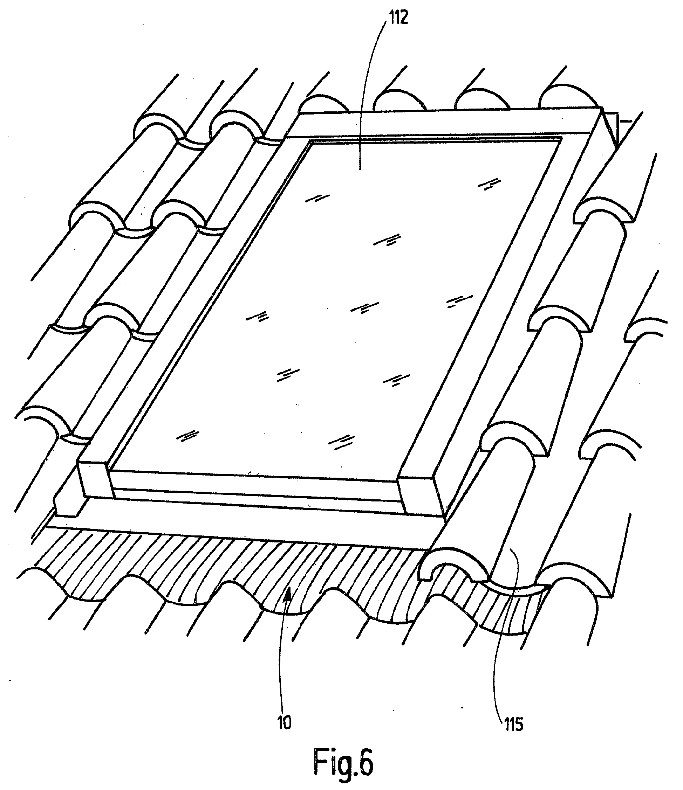

In den Fig. 5 und 6 ist ein Abschnitt eines Daches 100 mit in das Dach integrierten Bauwerksteilen, wie z. B. ein Kamin 111 (Fig. 5) oder ein Dachfenster 112 (Fig. 6), dargestellt.

Die Kamineinfassung gemäß Fig. 5 und die am Dachfenster 112 angebrachte Schürze gemäß Fig. 6 bestehen aus einem bandförmigen Metallblech 10 mit der Eigenschaft eines Dichtungsbandes, das generell für Anschlüsse im Steildach- und Flachdachbereich zur Herstellung von Abdichtungen zwischen einer Bedachung, wie Dachziegeln 115 und Bauwerksteilen 111, 112, eingesetzt wird.

Das Metallblech 10 besteht bevorzugterweise aus einem leicht verformbaren und flexibel einsetzbaren Material und aus einem bevorzugterweise sehr dünnwandigen, eine quadratische oder rechteckige oder eine andere geometrische Formgebung aufweisenden Formkörper 20, der als Platte, Blech oder als Folie ausgebildet sein kann und der mindestens eine auf den Dachziegeln des Daches aufliegende Längskante 21 aufweist.

Das Metallblech 10 besteht aus einem metallischen Material, wie Kupfer, Zink, Aluminium, Blei, auch im Verbund miteinander oder im Verbund mit einer Kunststofffolie oder aus einem zu Folien oder dünnen Platten strang- oder walzgepressten Bleigrundmaterial, oder aus einer Pb-Sn-Legierung oder aus einem zinnplattierten Bleiblech.

Mindestens eine der beiden Oberflächen 20a, 20b des Formkörpers 20 ist mit einer Lackbeschichtung 50 versehen. Der Lack dieser Beschichtung 50 weist eine der Farbe und dem Glanz des Bleis entsprechende bläulich glänzende, graue bleimetallische Farbgebung auf.

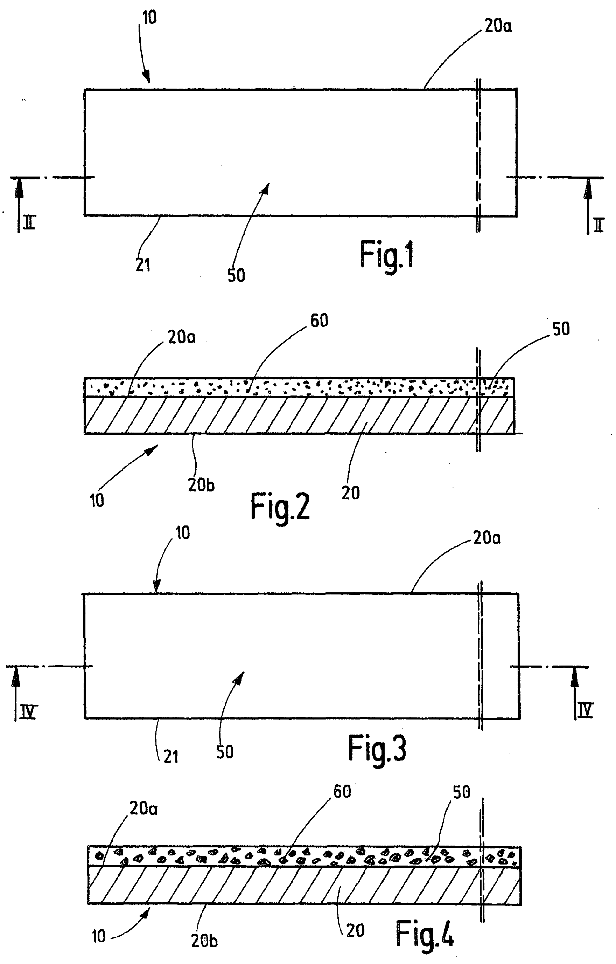

Nach der Ausführungsform besteht die Beschichtung 50 aus einem farblosen Lack mit eingearbeiteten Pigmenten, wobei Pigmente oder Teilchen 60 aus Blei in den farblosen Lack eingearbeitet sein können (Fig. 3 und 4).

Die Ausführungsform sieht vor, dass die Lackbeschichtung 60 aus einem bevorzugterweise grau gefärbten oder bleigrau gefärbten Lack besteht, in den Pigmente oder Teilchen 60 aus Blei eingearbeitet sind.

Die Pigmente oder Teilchen 60 aus Blei weisen eine Korngrößenverteilung von 0,3 µm bis 200 µm mit einer spezifischen Oberfläche von 1,0 m²/g bis 1,5 m²/g auf.

Durch die Verwendung von insbesondere in farblosem Lack eingearbeiteten Pigmente oder Teilchen 60 aus Blei wird die Bildung von Bleicarbonaten auf der Oberfläche von Bleiblechen und somit die Bildung einer weißen Schicht vermieden, so dass immer der Bleicharakter erhalten bleibt.

## Patentansprüche

1. Metallblech (10) in glatter, gebogener, gewellter oder getriebener Form zur Verwendung als Schürze im Umfangsbereich eines Eindeckrahmens von Dachfenstern, im Bereich von Dachdurchdringungen von Kaminen oder als Dichtungsband für eine First- oder Gratabdeckung mit an die Oberseite von im First- oder Gratbereich eines Daches verlegten Dachziegeln anpassbaren Längsseitenbereichen, wobei das Metallblech mit einer Beschichtung (50) versehen ist, und das Metallblech (10) aus einem ebenflächigen, verformbaren Formkörper (20), wie Platte oder Folie, aus einem metallischen Material, wie Kupfer, Zink, Aluminium, bevorzugterweise aus Blei, auch im Verbund mit anderem metallischen Material oder im Verbund mit einer Kunststofffolie oder aus einem Verbundmaterial aus einem zu Folien oder dünnen Platten strang- oder walzgepressten Bleigrundmaterial oder aus einem zinnplattierten bleihaltigen Grundmaterial besteht, **dadurch gekennzeichnet, dass** die Beschichtung (50) eine der Farbe und dem Glanz des Bleis entsprechende Farbgebung aufweist, wobei die Beschichtung (50) aus einem farblosen Lack mit eingearbeiteten Pigmenten oder Teilchen (60) aus Blei besteht, wobei die Pigmente oder Teilchen (60) aus Blei eine Korngrößenverteilung von 0,3 µm bis 200 µm mit einer spezifischen Oberfläche von 1,0 m²/g bis 1,5 m²/g aufweisen.

## Claims

1. Sheet metal (10) in a smooth, curved, corrugated or embossed form for use as an apron in the peripheral region of a cover frame of roof windows, in the region of roof penetrations of fireplaces or as a sealing strip for a ridge or arris capping with longitudinal side areas adjustable to the surface of roof tiles laid in the ridge or arris area of a roof, wherein the metal sheet is provided with a coating (50) and the metal sheet (10) consists of a planar, deformable molded body (20), such as plate or sheet, made of a metallic material, such as copper, zinc, aluminum, preferably of lead, also in combination with other metallic material or in combination with a plastic film, or consists of a composite material of a lead base material extruded or roller compacted into sheets or thin plates, or consists of a tin-plated lead-containing base material, **characterized in that** the coating (50) has a coloring corresponding to the color and the brightness of the lead, wherein the coating (50) consists of a colorless lacquer with incorporated pigments or particles (60) of lead, wherein the pigments or particles (60) of lead have a particle size distribution of 0.3 µm to 200 µm with a specific surface area of 1.0 m²/g to 1.5 mm²/g.

## Revendications

1. Tôle métallique (10) de forme lisse, pliée, ondulée ou bosselée destinée à être utilisée comme tablier dans une zone périphérique d'un cadre de couverture de fenêtre de toit, dans la zone de percées de toit de cheminées ou en tant que bande d'étanchéité pour une couverture de faîtage ou d'arête avec des zones latérales longitudinales adaptables au côté supérieur des tuiles posées dans la zone de faîtage ou d'arête d'un toit, la tôle métallique étant dotée d'un revêtement (50) et la tôle métallique (10) étant composée d'un corps moulé (20) à surface plane, déformable, comme une plaque ou une feuille, d'un matériau métallique, comme le cuivre, le zinc, l'aluminium, de préférence le plomb, également en combinaison avec une feuille de matière plastique ou d'un matériau composite composé d'un matériau de base en plomb extrudé ou laminé en feuilles ou plaques fines ou d'un matériau de base à placage d'étain contenant du plomb, **caractérisée en ce que** le revêtement (50) présente une coloration correspondant à la couleur et à la brillance du plomb, le revêtement (50) étant composé d'une peinture incolore avec des pigments ou particules (60) de plomb incorporés, les pigments ou particules (60) de plomb comportant une répartition granulométrique de 0,3 µm à 200 µm avec une surface spécifique de 1,0 m²/g à 1,5 m²/g.
